# EUROPEAN PATENT APPLICATION

(11) **EP 4 195 047 A1**
(43) Date of publication of application: **14.06.2023**
(21) Application number: 22205673.1
(22) Date of filing: 05.11.2022
(51) Int. Cl.: G06F 9/50, G06F 9/48

(54) **PROCESSING UNITS, PROCESSING DEVICE, METHODS AND COMPUTER PROGRAMS**

(30) Priority: 09.12.2021 US 202117643424
(71) Applicant: INTEL Corporation, Santa Clara, CA 95054 (US)
(72) Inventor: REED, Isayah, Hillsboro, 97123 (US); BORGES, Leonardo Jose, Portland, 97239 (US)
(74) Representative: 2SPL Patentanwälte PartG mbB

(57) **Abstract**

A first processing unit is provided. The first processing unit comprises one or more interfaces configured to communicate with a plurality of second processing units and processing circuitry configured to control the one or more interfaces. Further, the processing circuitry is configured to perform at least one computation task and to receive information about a performed communication task of each second processing unit of the plurality of second processing units. Further, the processing circuitry is configured to determine a balance counter based on the communication tasks received from each second processing unit of the plurality of second processing units and to adjust a computation task parameter and/or a communication task parameter to improve a load balancing of the first processing unit and/or at least one second processing unit of the plurality of second processing units based on the balance counter.

## Description

### Background

Load balancing is one of the central problems which have to be solved to achieve a high performance from a parallel computer system. For parallel applications load balancing attempts to distribute the computation load across multiple processors or machines of a parallel computer system as evenly as possible to improve a performance.

When each processor is solving one block of data, the processor has to communicate with their neighbors periodically. The parallel program can be divided in terms of a series of block solvers and interface solvers. The block solver is for computing the solution for a block. The interface solver is for exchanging information between block boundaries. The execution time of each process is affected by several time-varying factors, e.g., the load of processors, the load of the network, the solution scheme used for solving each block, sizes of blocks, etc. Therefore, some processors may complete computation earlier than other processors and wait periodically for information from other processors. Such waiting significantly increases the elapsed program execution time and decreases the efficiency of the parallel computer system.

Since load imbalance leads directly to processor idle times, high efficiency can only be achieved if the computational load is evenly balanced among the processors of the parallel computer system. Obtaining near-to-ideal compute and communication load balancing is typically not a straightforward task. One hard scenario for load balancing is when the algorithm relies on an all-to-all communication pattern. For this all-to-all communication pattern one approach is to determine the balance point based on running multiple trials with different computation configuration versus communication configuration of the processors and exhaustively observing the performance trends from the data. However, this is time consuming and costly, making the adoption of recurring and frequent tuning almost prohibitive on a production cluster environment. Thus, there may be a need to improve a load balancing, e.g. a method for load balancing.

### Brief description of the Figures

Some examples of apparatuses and/or methods will be described in the following by way of example only, and with reference to the accompanying figures, in which
Fig. 1 shows a block diagram of an example of a first processing unit;
Fig. 2 shows a block diagram of an example of a processing device;
Figs. 3a and 3b show a schematic representation of determining a balance between computation time and communication time;
Figs. 4a-4f show an example of a proof-of-principle;
Fig. 5 shows an example of a method for a first processing unit;
Fig. 6 shows a block diagram of an example of a second processing unit;
Fig. 7 shows an example of a method for a processing device;
Fig. 8 shows an example of a method for a second processing unit; and
Fig. 9 shows a computing device.

### Detailed Description

Various examples will now be described more fully with reference to the accompanying drawings in which some examples are illustrated. In the figures, the thicknesses of lines, layers and/or regions may be exaggerated for clarity.

Accordingly, while further examples are capable of various modifications and alternative forms, some particular examples thereof are shown in the figures and will subsequently be described in detail. However, this detailed description does not limit further examples to the particular forms described. Further examples may cover all modifications, equivalents, and alternatives falling within the scope of the disclosure. Like numbers refer to like or similar elements throughout the description of the figures, which may be implemented identically or in modified form when compared to one another while providing for the same or a similar functionality.

It will be understood that when an element is referred to as being "connected" or "coupled" to another element, the elements may be directly connected or coupled or via one or more intervening elements. If two elements A and B are combined using an "or", this is to be understood to disclose all possible combinations, i.e. only A, only B as well as A and B. An alternative wording for the same combinations is "at least one of the group A and B". The same applies for combinations of more than 2 Elements.

The terminology used herein for the purpose of describing particular examples is not intended to be limiting for further examples. Whenever a singular form such as "a," "an" and "the" is used and using only a single element is neither explicitly or implicitly defined as being mandatory, further examples may also use plural elements to implement the same functionality. Likewise, when a functionality is subsequently described as being implemented using multiple elements, further examples may implement the same functionality using a single element or processing entity. It will be further understood that the terms "comprises," "comprising," "includes" and/or "including," when used, specify the presence of the stated features, integers, steps, operations, processes, acts, elements and/or components, but do not preclude the presence or addition of one or more other features, integers, steps, operations, processes, acts, elements, components and/or any group thereof.

Unless otherwise defined, all terms (including technical and scientific terms) are used herein in their ordinary meaning of the art to which the examples belong.

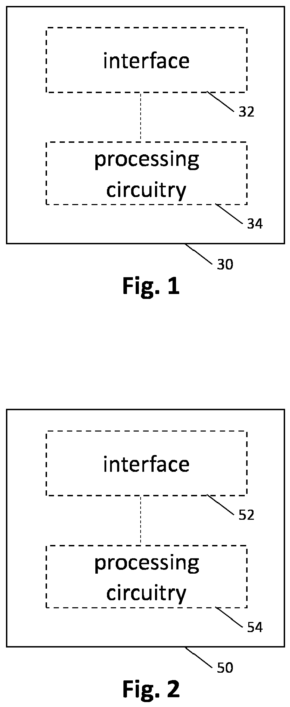

Fig. 1 shows a block diagram of an example of a first processing unit 30. The first processing unit 30 comprises one or more interfaces 32 configured to communicate with a plurality of second processing units and processing circuitry 34 configured to control the one or more interfaces 32. Further, the processing circuitry 34 is configured to perform at least one computation task and to receive information about a performed communication task of each second processing unit of the plurality of second processing units. Further, the processing circuitry 34 is configured to determine a balance based on the communication tasks received from each second processing unit of the plurality of second processing units and to adjust a computation task parameter and/or a communication task parameter to improve a load balancing of the first processing unit and/or at least one second processing unit of the plurality of second processing units based on the balance. By using the balance a load balancing can be eased. For example, complex load balancing schemes known from other systems (comprising information collection, decision-making and data migration) can be omitted. For example, information collection can be solely based on the balance, which may decrease a resource consumption for the information collection. This way, a balance load can be improved, e.g., the information collection can be eased.

For example, the balance may reflect a balance between block solver (e.g., a computation execution time) and interface solver (e.g., a communication execution time), especially for an algorithm that relies on an all-to-all communication pattern. Thus, by using the balance counter a quickly and accurately detection of the balance between block solver and interface solver can be determined. For example, this can be used to determine a maximum amount of a computation execution time that can be overlapped with a communication execution time.

For example, when a round of all-to-all communication starts, the balance may be used to measure how many second processing units of the plurality of second processing units (e.g., endpoints of the parallel computing system) may have completed a prior all-to-all communication. This way, the determined balance counter may allow to estimate how well communication execution time and compute execution time overlap in the current configuration.

The computation task parameter, which is adjusted, can be a computation execution time, a block solver size (e.g. an amount of work), etc.

The communication task parameter, which is adjusted, can be a communication execution time, an interface solver size, a message size, etc. For example, an increase in the message size may lead to an increase of the communication execution time, since a time needed for message transmission may be increased due to the increased message size. Thus, the balance may change since the communication task of at least one second processing unit changes for an increased message size.

In an example, determining the balance may be performed by increasing a value of a balance counter by a number of each second processing unit of the plurality of second processing units from which the information is received before performing the computation task is completed.

For example, the balance counter may be used to measure how often the first processing unit has not waited on a communication task of a second processing unit to complete (e.g., how often the communication execution time of a respective second processing unit has not exceeded the computation execution time of the first processing unit). For example, a default value of the balance counter may be zero and the default value of the balance counter may be increased by one for each second processing unit which has completed its respective communication task before the computation task of the first processing unit was completed. For example, a second processing unit can only complete its communication task if it has completed its own computation task. Thus, when the first processing unit receives the information about the performed communication task, this may mean that the second processing unit has completed its own computation task before completing its communication task.

In an example, the processing circuitry 34 may be further configured to determine a load balance parameter by dividing the balance counter by a number of the plurality of second processing units and to adjust the computation task parameter and/or the communication task parameter based on the load balance parameter. Therefore the balance counter can be used to measure how often the first processing unit has waited on communication to complete, relative to the total number of communications initiated, e.g., the number of the plurality of second processing units if each processing has performed a communication task, by determining the load balance parameter.

For example, the number of the plurality of second processing units may be given by the number of second processing units which are performing a communication task corresponding to the at least one computational task. This, way only the second processing units involved in a current computational task can be considered for the determination of the load balance parameter.

After a current computation task (e.g., the at least one computation task) is completed, the first processing unit may count the number of second processing units that finalized their interface solver (e.g., finalized their portion of communication task), e.g., using the balance counter. This value can be used to determine how often the algorithm has waited for a second processing unit to complete its communication task (e.g., the communication execution time has exceeded the computation execution time). Further, based on the total number of involved second processing units the load balance parameter can be determined.

For example, the balance counter/load balance parameter can be used to accurately detect a balance-point between communication execution time and computation execution time in an all-to-all algorithm. It can be implemented on any network fabric, and it can be used to automate and shorten time to tune a pipelined all-to-all application. This way, a system process execution time of a system process of the parallel computer system may be reduced, which may improve a performance of the parallel computer system. Further, the principle of using the balance counter/load balance counter can be generalized to other classes of all-to-all algorithms.

An ideal balance and overlap between communication execution time and computation execution time may be achieved when the number of completed communication tasks (as determined by the balance counter) is nearly equal to the total number of communication tasks performed by the plurality of second processing units (e.g., the number of involved second processing units). Thus, a speed with regard to detecting the balance point of overlapping computation execution time with (non-blocking) communication execution time can be increased.

The use of the balance counter/load balance parameter may have a faster turnaround time and can be used to implement an automatic load-balancing functionality, e.g., by adjusting the load balance parameter automatically (e.g., based on a desired predefined load balance parameter range). Further, it can be precisely determined how much computing can be performed before completion of non-blocking communication, e.g., a maximum execution time for the first processing unit can be determined.

In an example, if the load balance parameter is not within a predefined load balance parameter range the processing circuity 34 may be further configured to reperform the at least one computation task with the adjusted computation task parameter and to transmit information to the plurality of second processing units to reperform the communication task. Further the processing circuitry 34 may be configured to reset the balance counter and redetermine the balance counter based on the reperformed communication tasks received from each second processing unit of the plurality of second processing units. Further, the processing circuitry 34 may be configured to redetermine the load balance parameter and to check if the redetermined load balance parameter is within the load balance parameter range. If not the processing circuitry 34 may be further configured to readjust the computation task parameter and/or the communication task parameter to improve a load balancing of the first processing unit and/or at least one second processing unit of the plurality of second processing units based on the redetermined load balance parameter and reperform the at least one computation task, with the readjusted computation task parameter and transmit information to the plurality of second processing units to reperform the communication task and redetermine the load balance parameter until the load balancing parameter is within the load balance parameter range. This way, the determined load balancing parameter can be adjusted, e.g., the computational execution time and/or the communication execution time can be adjusted to improve the load balancing.

The at least one computational task can be reperformed until the (re)determined load balance parameter is in a predefined load balance parameter range. For example, reperforming the at least one computation task can be done by restarting the at least one computational task on the parallel computer system with the (re)adjusted computation task parameter/ communication task parameter.

For example, if the load balance parameter is below the predefined load balance parameter range the computation execution time can be increased. This may result in an increased load balance parameter, since the communication execution time to complete a communication task is increased, accordingly. Thus, the number of second processing units which have completed its communication task before the completion of the computation task is completed may be increased, leading to an increased balance counter and consequently to an increased load balance parameter, which may increase the load balancing.

For example, if the load balance parameter is above the predefined load balance parameter range the computation execution time can be decreased. This may result in a decreased load balance parameter, since the communication execution time to complete a communication task is decreased, accordingly. Thus, the number of second processing units which have completed its communication task before the completion of the computation task is completed may be decreased, leading to a decreased balance counter and consequently to a decreased load balance parameter, which may increase the load balancing. Note in principle an increased load balance parameter may reflect an increased load balancing. However, there may be an optimal value for the load balance parameter depending on the parallel computer system, e.g., roughly between 0.95 and 0.97. Thus, if the load balance parameter is larger than this optimal value, e.g., 0.99, the load balancing may be decreased in comparison to the smaller (optimal) value, e.g., 0.96. If the load balance parameter is noticeable smaller than 1, the computation task is completing before communication tasks finishes and the hardware compute resources of the parallel computer system are underutilized (e.g., the first processing unit may be idle and waiting for plurality of second processing units to complete their respective communication task). A load balance parameter lower than 0.95 may indicate that the size of the compute task must be increased (e.g., leading to an increase in the computation execution time) to guarantee more effective overlap between communication task and computation task, for example. For example, if the load balance parameter is equal 1, then a balance point is past.

In an example, the transmitted information to the plurality of second processing units to reperform the communication task may further comprise information about the adjusted communication task parameter and/or the readjusted communication task parameter for at least one second processing unit of the plurality of second processing units. This way, the communication task parameter of at least one second processing unit of the plurality of second processing units can be adjusted in an eased way. For example, the at least one second processing unit cannot use a balance counter and thus the at least one second processing unit is enabled to receive information retrieved from the balance counter of the first processing unit. Thus, the balance loading can be increased by adjusting both the computation task parameter and the communication task parameter.

Alternatively, only the communication task parameter can be adjusted. For example, the first processing unit may transmit information about an adjusted communication task parameter to the second processing unit and a reperform may comprise the adjusted communication task parameter and the non-adjusted computation task parameter.

In an example, if the load balance parameter is not within a predefined load balance parameter range the processing circuity 34 may be further configured to perform a further computation task and to reset the balance counter and to redetermine the balance counter based on the further performed communication tasks received from each second processing unit of the plurality of second processing units. Further, the processing circuitry 34 may be configured to redetermine the load balance parameter and to check if the redetermined load balance parameter is within the load balance parameter range. If not the processing circuitry 34 may be further configured to readjust the computation task parameter and/or the communication task parameter to improve a load balancing of the first processing unit and/or at least one second processing unit of the plurality of second processing units based on the redetermined load balance parameter and to perform another further computation task, communication tasks and redetermination of the load balance parameter until the load balancing parameter is within the load balance parameter range. This way, the determined load balancing parameter can be adjusted, e.g., the computational execution time and/or the communication execution time can be adjusted to improve the load balancing (comparable to reperform the computation task).

Processing a further computation task may be done optionally or alternatively to reperform the computation task to adjust the load balance parameter. Performing a further computational task may be a rather dynamically change (and adjustment) of the computation execution time to be overlapped with communication execution time.

Both, processing a further computation task and reperforming the computation task can be implemented through a software and/or directly in the communication hardware, which can signal the first processing unit and/or the at least one second processing unit.

In an example, a load balance parameter range may be 0.95 to 0.97. Thus, it can be ensured that the load balance parameter is near an optimal value for the load balancing.

In an example, the processing circuitry 34 may be further configured to adjust a predefined load balance parameter range based on a user input. Thus, the load balance parameter range can be adjusted, which may increase a user experience. For example, a time needed for the determination of the load balancing parameter may be decreased for a larger load balance parameter range, since the load balance parameter range can be reached by less iterations to adjust the load balance parameter.

In an example, adjust the computation task parameter and/or the communication task parameter may comprise adjusting a message size of a communication task of the at least one second processing unit. In an example, adjust the computation task parameter and/or the communication task parameter may comprise adjusting a compute size of the least one computation task (e.g., increasing the block solver). This way, the computation execution time may be increased, such that the number of second processing units, which complete their communication task before the computation task is completed may be increased.

In an example, adjust the computation task parameter and/or the communication task parameter may comprise adjusting a communication pipeline depth. By adjusting the communication pipeline depth the balance between computation execution time and communication execution time can be changed and thus the balance load parameter can be adjusted, e.g., to increase the balance load.

In an example, determining the balance counter and/or determining the load balance parameter may comprise the use of a parallel programming library providing one-sided remote direct memory access. In an example, determining the balance counter and/or determining the load balance parameter may comprise the use of a one-sided message-passing interface exchange at a cluster level. This way, the message between the first processing unit and the plurality of second processing units can be exchanged in an improved way, e.g., all messages belonging to an all-to-all communication pattern for a computation task, e.g., the at least one computation task.

In an example, adjust the computation task parameter and/or the communication task parameter based on the load balance parameter may comprise a use of a user input. The user input may comprise information about a starting value for the computation task parameter and/or the communication task parameter. For example, the user input may comprise information about a message size, communication execution time, computation execution time, etc. This way, a determination of a desired load balance parameter (e.g., in between the load balance parameter range) may be increased, since the user input may provide a starting value, which may lead to an improved load balance in comparison to default values. For example, the user input may be provided by an expert, such that the starting parameter may be already close to a computation task parameter and/or a communication task parameter for a desired load balancing.

Alternatively, if no user input is provided/received/requested the computation task/communication task may be performed with predefined/default computation task parameter and communication task parameter, which may enable a fully automated determination of the load balance parameter. In an example, adjust the computation task parameter and/or the communication task parameter based on the load balance parameter may comprise a use of a predefined computation task parameter and/or a communication task parameter. However, since the default value may be not that good as the values provided by the user input this may take longer but can be fully automated, e.g., no further knowledge on user's side is required. This way, even a non-expert can use the balance load parameter to improve the load balancing of a parallel computer system.

The processing unit 30 may be a computer, processor, control unit, (field) programmable logic array ((F)PLA), (field) programmable gate array ((F)PGA), graphics processor unit (GPU), application-specific integrated circuit (ASICs), integrated circuits (IC) or system-on-a-chip (SoCs) system. The first processing circuitry 34 may be a computer, processor, control unit, (field) programmable logic array ((F)PLA), (field) programmable gate array ((F)PGA), graphics processor unit (GPU), application-specific integrated circuit (ASICs), integrated circuits (IC) or system-on-a-chip (SoCs) system. The second processing unit may be a computer, processor, control unit, (field) programmable logic array ((F)PLA), (field) programmable gate array ((F)PGA), graphics processor unit (GPU), application-specific integrated circuit (ASICs), integrated circuits (IC) or system-on-a-chip (SoCs) system.

As shown in Fig. 1 the respective one or more interfaces 32 are coupled to the respective processing circuitry 34 at the first processing unit 30. In examples the processing circuitry 34 may be implemented using one or more processing units, one or more processing devices, any means for processing, such as a processor, a computer or a programmable hardware component being operable with accordingly adapted software. Similar, the described functions of the processing circuitry 34 may as well be implemented in software, which is then executed on one or more programmable hardware components. Such hardware components may comprise a general-purpose processor, a Digital Signal Processor (DSP), a micro-controller, etc. The processing circuitry 34 is capable of controlling the one or more interfaces 32, so that any data transfer that occurs over the one or more interfaces 32 and/or any interaction in which the one or more interfaces 32 may be involved may be controlled by the processing circuitry 34.

In an embodiment the first processing unit 30 may comprise a memory and at least one processing circuitry 34 operably coupled to the memory and configured to perform the below mentioned method.

In examples the one or more interfaces 32 may correspond to any means for obtaining, receiving, transmitting or providing analog or digital signals or information, e.g. any connector, contact, pin, register, input port, output port, conductor, lane, etc. which allows providing or obtaining a signal or information. The one or more interfaces 32 may be wireless or wireline and it may be configured to communicate, e.g., transmit or receive signals, information with further internal or external components. The one or more interfaces 32 may comprise further components to enable communication between vehicles. Such components may include transceiver (transmitter and/or receiver) components, such as one or more Low-Noise Amplifiers (LNAs), one or more Power-Amplifiers (PAs), one or more duplexers, one or more diplexers, one or more filters or filter circuitry, one or more converters, one or more mixers, accordingly adapted radio frequency components, etc.

More details and aspects are mentioned in connection with the examples described below. The example shown in Fig. 1 may comprise one or more optional additional features corresponding to one or more aspects mentioned in connection with the proposed concept or one or more examples described below (e.g., Fig. 2 - 9).

Fig. 2 shows a block diagram of an example of a processing device 50. The processing device 50 comprises one or more interfaces 52 configured to communicate with a plurality of first processing units as described with reference to Fig. 1 and a processing circuitry 54 configured to control the one or more interfaces 52. Further, the processing circuitry 54 is configured to receive information about a balance of each first processing unit of the plurality of first processing units and to generate an average balance by averaging all balances of the plurality of first processing units. Further, the processing circuitry 54 is configured to transmit information to adjust the computation task parameter and/or the communication task parameter to improve a load balancing of the plurality of first processing units based on the average balance to at least one first processing unit of the plurality of first processing units. This way, a load balancing of the first processing units can be improved. Each first processing unit of the plurality of first processing units may use an individual balance to perform a single poll that checks if a communication task with other first processing units (or second processing units) is complete. Thus, the information about the individual balance can be provided to the processing device 50.

For example, the information to adjust the computation task parameter and/or the communication task parameter may comprise the average balance, such that the at least one first processing unit is enabled to adjust the computation task parameter and/or the communication task parameter on its own on base of the average balance.

Optionally or alternatively, the information to adjust the computation task parameter and/or the communication task may comprise an adjusted computation task parameter and/or communication task parameter. This way the at least first processing unit can receive an adjusted computation task parameter and/or communication task parameter from the processing circuitry 54. Thus, the at least first processing unit can adjust the computation task parameter and/or communication task parameter without a need to generate the adjusted computation task parameter and/or communication task parameter. Therefore, the at least first processing unit can be enabled to adjust the computation task parameter and/or the communication task parameter straight forward, e.g., for reperforming the computation task and/or performing a further computation task, even if the at least first processing unit is not capable to generate the adjusted computation task parameter and/or communication task parameter on its own.

In an example, the processing circuitry 54 may be further configured to receive information about a load balance parameter of each first processing unit from the plurality of first processing units and to generate an average load balance parameter by averaging all load balance parameters of the plurality of first processing units. Further, the processing circuitry 54 may be configured to transmit information to adjust the computation task parameter and/or the communication task parameter to improve a load balancing of the plurality of first processing units based on the average load balance parameter to at least one first processing unit of the plurality of first processing units. This way, a load balancing of the first processing units can be improved.

For example, the information to adjust the computation task parameter and/or the communication task parameter may comprise the average load balance parameter, such that the at least one first processing unit is enabled to adjust the computation task parameter and/or the communication task parameter on its own on base of the average balance.

Optionally or alternatively, the information to adjust the computation task parameter and/or the communication task may comprise an adjusted computation task parameter and/or communication task parameter, such that the at least first processing unit can use this adjusted computation task parameter and/or communication task parameter straight forward, e.g., for reperforming the computation task and/or performing a further computation task.

For example, the processing circuitry 54 may obtain information about the computation task parameter and/or the communication task parameter of the at least one first processing unit, e.g., may receive information about a current communication execution time and/or may determine a current communication execution time based on the received information from the at least one first processing unit. This way, the processing device 50 may determine an improved computation task parameter and/ the communication task parameter especially for the at least one first processing unit.

For example, the determined average load balance parameter may indicate a need to increase the average load balance parameter to increase a load balancing of the parallel computer system. This can be achieved by increasing the computation execution time or by decreasing the communication execution time of the at least one first processing unit, for example. Thus, the adjusted computation task parameter (e.g., reduced computation execution time) and/or the adjusted communication task parameter (e.g., increased communication execution time) can be transmitted to the at least first processing unit.

Optionally, the processing circuitry 54 may determine the at least first processing unit of the plurality of first processing units based on a maximal/minimal computation task parameter and/or communication task parameter. For example, if the load balance parameter indicates that a computation execution time has to be increased, the processing device 50 may determine the first processing unit with the lowest computation execution time and may transmit the adjusted (increased) computation execution time to this first processing unit. The same feature can also be implemented into the first processing unit with respect to the plurality of second processing units as described with reference to Fig. 1.

The processing device 50 may be a computer, processor, control unit, (field) programmable logic array ((F)PLA), (field) programmable gate array ((F)PGA), graphics processor unit (GPU), application-specific integrated circuit (ASICs), integrated circuits (IC) or system-on-a-chip (SoCs) system.

As shown in Fig. 2 the respective one or more interfaces 52 are coupled to the respective processing circuitry 54 at the processing device 50. In examples the processing circuitry 54 may be implemented using one or more processing units, one or more processing devices, any means for processing, such as a processor, a computer or a programmable hardware component being operable with accordingly adapted software. Similar, the described functions of the processing circuitry 54 may as well be implemented in software, which is then executed on one or more programmable hardware components. Such hardware components may comprise a general-purpose processor, a Digital Signal Processor (DSP), a micro-controller, etc. The processing circuitry 54 is capable of controlling the one or more interfaces 52, so that any data transfer that occurs over the one or more interfaces 52 and/or any interaction in which the one or more interfaces 52 may be involved may be controlled by the processing circuitry 54.

In an embodiment the processing device 50 may comprise a memory and at least one processing circuitry 54 operably coupled to the memory and configured to perform the below mentioned method.

In examples the one or more interfaces 52 may correspond to any means for obtaining, receiving, transmitting or providing analog or digital signals or information, e.g. any connector, contact, pin, register, input port, output port, conductor, lane, etc. which allows providing or obtaining a signal or information. The one or more interfaces 52 may be wireless or wireline and it may be configured to communicate, e.g., transmit or receive signals, information with further internal or external components. The one or more interfaces 52 may comprise further components to enable communication between vehicles. Such components may include transceiver (transmitter and/or receiver) components, such as one or more Low-Noise Amplifiers (LNAs), one or more Power-Amplifiers (PAs), one or more duplexers, one or more diplexers, one or more filters or filter circuitry, one or more converters, one or more mixers, accordingly adapted radio frequency components, etc.

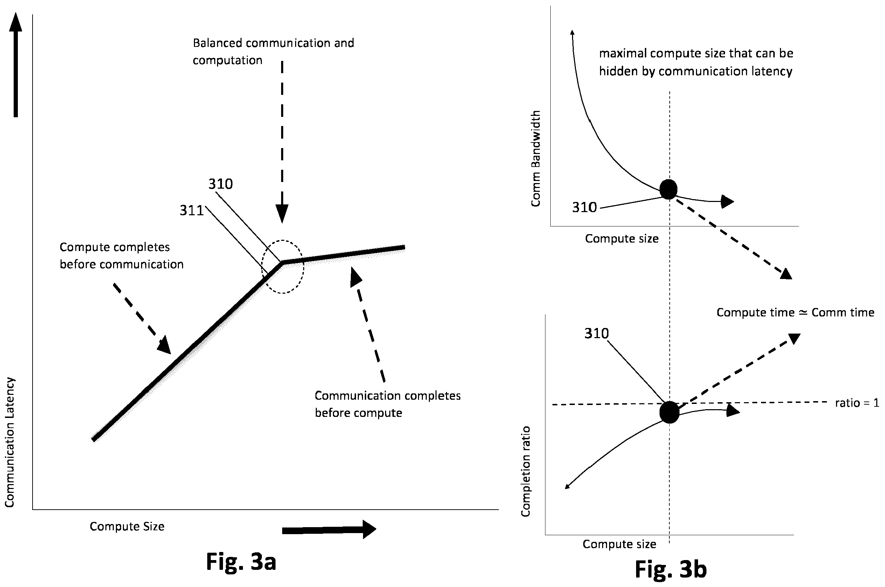

More details and aspects are mentioned in connection with the examples described above and/or below. The example shown in Fig. 2 may comprise one or more optional additional features corresponding to one or more aspects mentioned in connection with the proposed concept or one or more examples described above (e.g., Fig. 1) and/or below (e.g., Fig. 3 - 9).

Figs. 3a and 3b show a schematic representation of determining a balance between computation (execution) time and communication (execution) time. As can be seen in Fig. 3a there may be a balance point 310 between a compute size (e.g., a needed computation execution time for a block solver) and a communication latency (e.g., a needed communication execution time for an interface solver). Using the balance (e.g., a balance counter/load balance parameter) this balance point 310 of a latency curve for varying amount of concurrent compute size can be determined faster and/or more accurate.

For example, each processing unit (e.g., the first processing unit as described with reference to Figs. 1, 2) of the parallel computer system may use a test operation to determine how often it is waiting on a computation task to complete. A return of the test operation may indicate if the processing unit has completed its communication task before completing its computation task. Further, a counter to count how often an algorithm waits on non-blocking communication completion may be introduced, e.g., the balance counter. For example, a completion ratio can be obtained by dividing the balance counter by the total number of non-blocking communication tasks (e.g., the load balance parameter). A balance may be found when the counter divided by the total number of non-blocking communication tasks approaches 1.

As can be seen in Fig. 3b a completion rate increases with the compute size and a communication bandwidth decreases with the compute size. The graph of the communication bandwidth versus the compute size is expected to be inverse to the graph of the completion ratio versus the compute size. Thus, it may be expected that balance counter approaches a ratio of 1:1 with the total number of non-blocking communication tasks (e.g., each involved second processing unit may be responsible for one non-blocking communication task). The balance point 310 should occur slightly before the 1:1 ratio, since a 1:1 would mean that the computation task was completed after each communication task. Thus for a 1:1 no statement on the computation execution (execution) time can be made, since the computation execution (execution) time could be much too large.

A target ratio, e.g., the load balance parameter range, can be tuned for an increased speed of finding a working balance point, in exchange for a lower accuracy, e.g., for the load balance parameter range may be 0.9 to 0.99, such that a workload balance point 311 could be found for 0.9, for example. However, the (optimal) balance point 310 may be at a different load balance parameter, but to find the (optimal) balance point 310 more time may be needed. Thus, a user can tradeoff between an accuracy and an adjustment speed. For example, for a small system process of the parallel computer system it may be better to perform the small system process with a decreased load balance, e.g., at the workload balance point, instead of investing too much time into finding the (optimal) load balance point 310. For example, the user may provide a desired load balance parameter range by a user input (as described with reference to Fig. 1), e.g., the user may want to perform a small system process and may increase a predefined load balance parameter range.

By using the load balance parameter a validated result may be determined for the load balance instead of manually and/or visually inspecting graphs from multiple trials. Further, a decreased overall number of trials may be needed to determine when load balance occurs, leading to shorter algorithm tuning time. Also, the user may adjust a process of finding a desired/required load balance simply by adjusting the load balance parameter range. Moreover, determining the load balance by use of the load balance parameter can be fully automated.

Thus, methods known from other system for determining the balance point which are based on running multiple trials with different configurations, plotting the communication bandwidth for each trial, and manually observing a compute trend versus a communication trend from the data. By using the balance counter, when a new round of communication start, the balance counter measures how many endpoints completed a prior all-to-all communication, allowing the balance counter to be used to estimate how well communication and compute overlap in the current configuration.

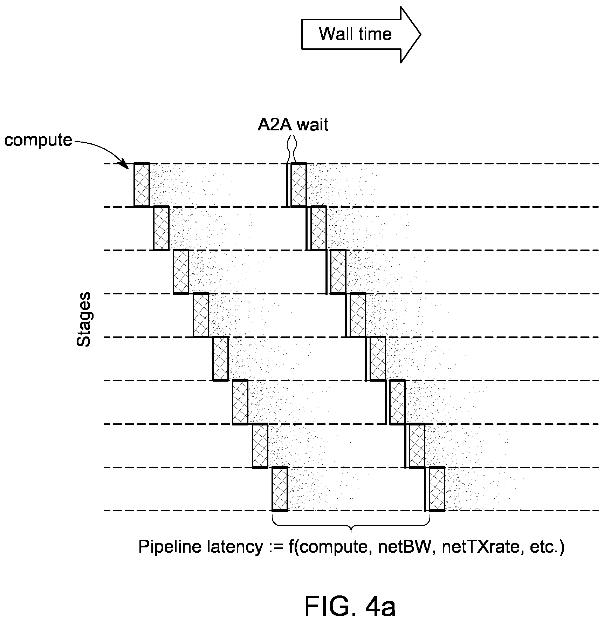

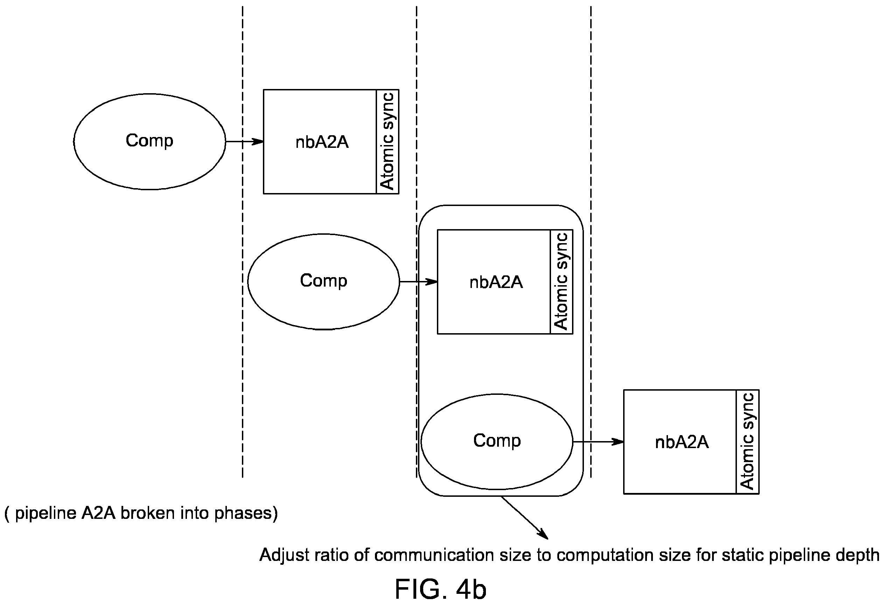

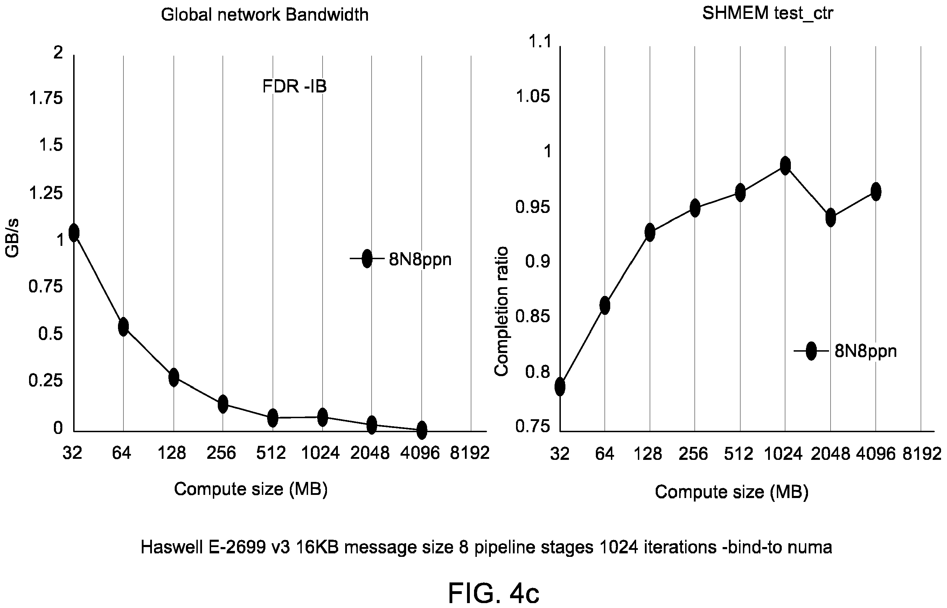

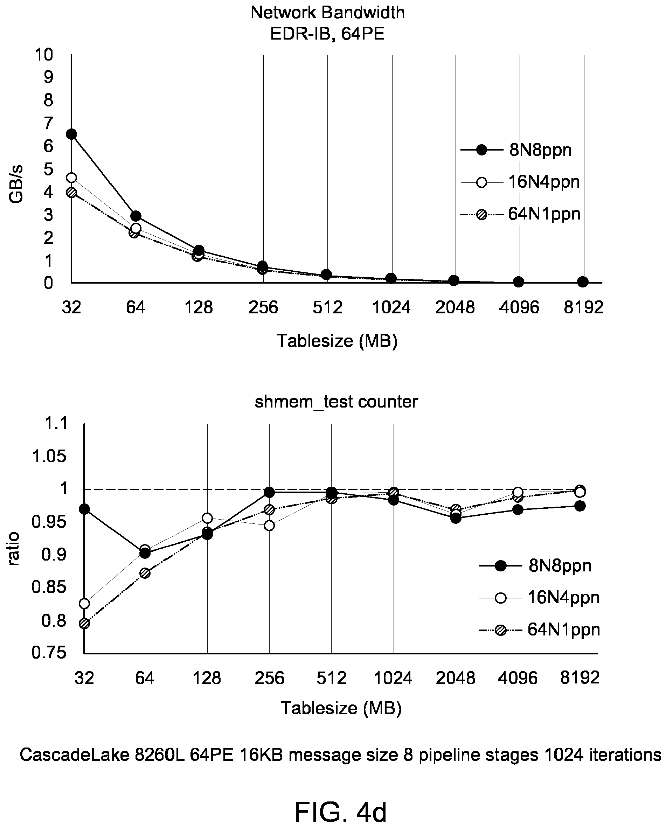

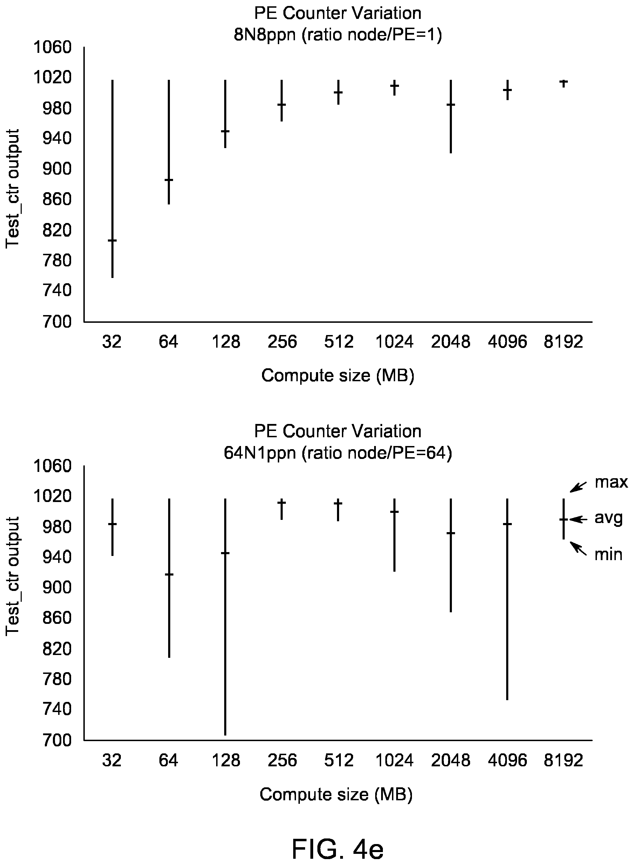

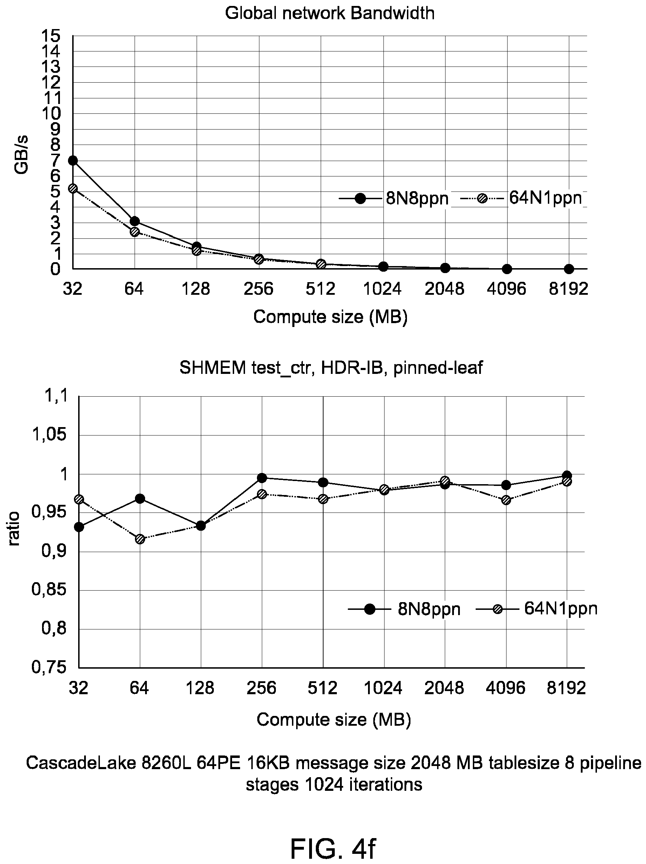

More details and aspects are mentioned in connection with the examples described above and/or below. The example shown in Fig. 3 may comprise one or more optional additional features corresponding to one or more aspects mentioned in connection with the proposed concept or one or more examples described above (e.g., Fig. 1 - 2) and/or below (e.g., Fig. 4 - 9).

Figs. 4a-4f show an example of a proof-of-principle. The proof-of-principle is a pipelined all-to-all (pa2a) benchmark. It comprises series of non-blocking all-to-all (nbA2A) data exchanges, preceded by computation. A communication is independent for a set of D successive exchanges, allowing a pipeline of D overlapping exchanges to proceed in parallel. A tunable communication task parameter is a message size, a pipeline depth, etc., for example. A computation is a sequence of memory scatter and gather operations that randomly accesses a large data table stored in memory. A tunable computation task parameter is a compute size (number of random accesses), for example.

The goal is an optimized implementation which maximizes memory, network, and compute bandwidth as close to system limits. As can be seen in Fig. 4a several pipeline stages are set up for an A2A-nonblocking communication, comprising an A2A-wait. A corresponding code may be as follow:

```
 for (size t loop = 0; loop < nloops; loop++)
 {
        {wait for stages to complete}
        for (size_t stage= 0; stage < nstages; stage++)
        {
        { Computational work }
        { Non-blocking Communication (Alltoall) for stage # }
        }
 }
```

The goal is to minimize a number of pipeline stages such that runtime minimized for a given number of processing units, A2A message size, computational time, etc. Further, it can be assumed that a computation time can be independently estimated without communication, e.g., estimated from extrapolation based on measured times, data, simulation, computational work (scatter-gather memory access time), for example.

Fig. 4b shows the pA2A overlapping pipelined communication stages. Parameters are number of computer cores (processing units), which can generate a high volume of memory access requests and high memory bandwidth when properly balanced. Tuning is hard and must be done on case-by-case basis, because pipeline latency depends on multiple parameters. The goal is to find the point where computation completes at the same time as communication from previous stage (e.g., how much computation can we fit before performance decreases).

The proof-of-principle is based on Infiniband networking, with a SHMEM implementation of a pA2A application. The methodology is fabric-agnostic and can be performed with any non-blocking message passing interface. A fixed number of processing units (also referred as processing elements, PEs) with a constant amount of work per PE is used and the number of nodes to analyze different communication configurations is varied. Further, the methodology takes average of all PEs. Note, an accuracy should improve with a larger number of PEs, and a smaller ratio of nodes to PEs. The Goal is to develop a PE and/or system computation and communication balance analysis for pipelined all-to-all applications

An example of the methodology (based on SHMEM) may be as follow:

| | |
|---|---|
| do_nbA2A(); | // non-blocking all-to-all communication |
| send_atomics(atomic flags); | // atomic synchronization for all-to-all |
| do_computation(); | // scatter-gather memory access computations |
| /*check if communication has completed ^{∗}/ | |
| if(shmem_int_test(atomics_flags,SHMEM_CMP_EQ,NPES)) | |
| | // PE completed A2A before computation completed |
| test_ctr++; | //count # iterations where we wait for compute |
| else | // PE did not complete A2A; compute may be too small |
| shmem_int_wait_until(atomics_flags, SHMEM_CMP_EQ,NPES); | |

The methodology comprises the following process.
1. It is compared how many times test ctr is reached (e.g., the balance counter as described above).
2. test ctr reached is compared to a total number of communication loops to generate a test ctr :loop ratio (e.g., the load balance parameter).
3. The computation task parameter is adjusted based on the test ctr :loop ratio. For example, if the test_ctr :loop ratio is low, then compute size is too small and the compute size is increased in a next trial. For example, if a ratio=1, then the balance point is past.

These three steps are repeated until a target (e.g., the lead balance parameter range) is reached, e.g., test_ctr is ~95-97% of total number of communication loops. For example, each PE may have a different test ctr ratio. Thus, an adjustment may be based on an average of the PE ratios. A number of trials to find target ratio can be drastically decreased with proper search algorithm

OpenSHMEM v1.4 introduced a shmem_test routine that gives more accurate measure of completion times for all-to-all communications. Using shmem test immediately before waiting for the all-to-all completion (shmem_wait_all) allows to determine if the all-to-all communications complete either during or after the computation with a single trial. As shmem test completions approach 100% of all communication iterations, the computation (execution) time approaches communication (execution) time. That is, the ratio of (shmem_test counter) / (total all-to-all loops) approaches one. This information can be used to determine exactly when the computation time exceeds the communication time in the pipeline communication applications and gives users the ability to adjust application configurations based on the results of each trial.

Fig. 4c shows a validation of completion counter for pA2A-SHMEM. The simple (meaning one switch, low/no network traffic, no other users on the system) FDR-IB study shows that the ratio approaches 1 at 512MB-1024MB of compute (which is where the bandwidth curve flattens and decreases at much slower rate). The configuration used is 16KB message size, 8 pipeline stages, 1024 iterations, and -bind-to numa process affinization. Experiments were run on 64 PEs with configuration of 8 cluster nodes with Xeon CascadeLake 8260L CPUs connected with EDR-IB fabric where each one of the 8 nodes ran eight PEs (8N8ppn).

Fig. 4d shows a larger study of validation of completion counter. The experimental result of the methodology matches with a perceived point of balance in the bandwidth graph (between table sizes 256MB and 512MB). Here the configuration used is 16KB message size, 8 pipeline stages, 1024 iterations, and -bind-to numa process affinization. Experiments were run on 64 PEs with configurations up to 64 Xeon CascadeLake 8260L cluster nodes connected with EDR-IB fabric: 8 nodes with eight PEs per node (8N8ppn), 16 nodes with four PEs per node (16N4ppn), and 64 nodes with one PE per node (64N1ppn). Outlier at 32MB compute size because compute fits in CPU cache when using 1 PE on a node (Note: Dip at 2048 is reproduceable and related to hardware and fabric stack).

The pipelined all-to-all global network bandwidth and shmem test methodology ratios for increasing scatter/gather table sizes are shown in Fig. 4d. the ratio (number of completed communication) / (total all-to-all loops) converges to the value 1 as the amount of compute (size) increases.

Fig. 4e shows a that smaller ratio of nodes to PE improves accuracy. The graphs show min, average, and max counter value test ctr of all PEs. (a max possible count is 1016). Note, each PE has its own test ctr and for the proof-of-principle methodology the average of all test ctr were used. Further, outliers and external traffic affects the average. Nodes and switches were randomly chosen, therefore other user jobs were executing.

Fig. 4f shows that accuracy improves with no external network traffic. The results are more consistent when pinning to as few switches as possible graphs show average across 3 trials. One leaf/switch has 18 nodes. 64 node trials distributed across 3 switches. An entire switch(es) is reserved for each trial, e.g., no other network traffic. Note: Endeavour switched to HDR-IB when same-leaf trials were conducted.

With the methodology analysis of graphs for numerous trials can be omitted. A single trial may tell how close a current configuration is to the balance point of compute task and communication task. A use dedicated search algorithm in subsequent trials may be used to find the balance point. This may significantly save time and improve accuracy. Further, the accuracy may scale with larger number of PEs and/or PEs per node. Also, the methodology with SHMEM and IB, should be fabric agnostic.

The methodology can give greater fabric-agnostic node details, including explaining how to adjust workload to balance/overlap computation and communication. It is possible to potentially determine how to adjust a loop/application computation to balance with communication. The methodology can be implanted into other known systems, e.g., an application and cluster profiling and characterization tools (such as like Vtune) could include feature in its hpc-performance analysis that shows ratio of computation to communication for each node, and use this information to determine which nodes have better performance than others

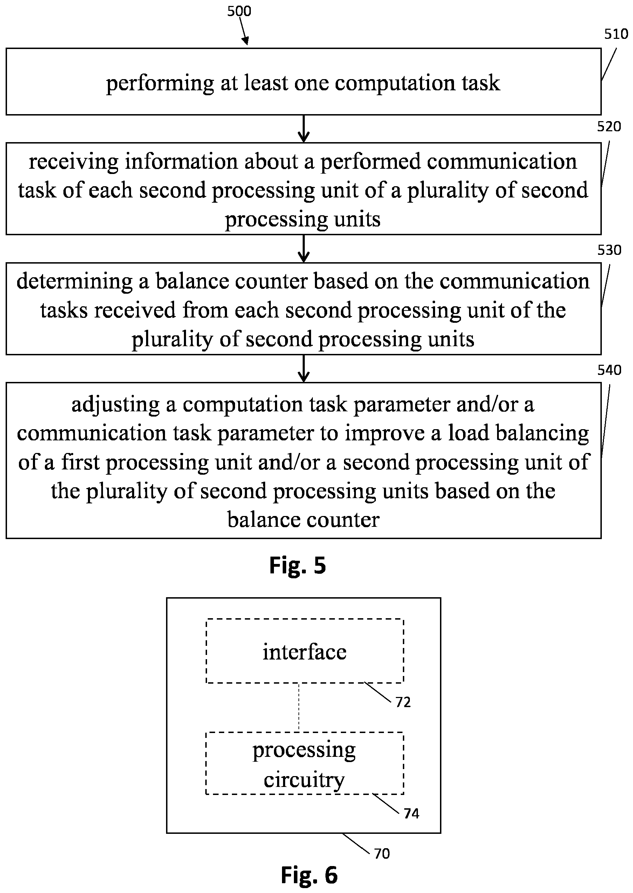

More details and aspects are mentioned in connection with the examples described above and/or below. The example shown in Fig. 4 may comprise one or more optional additional features corresponding to one or more aspects mentioned in connection with the proposed concept or one or more examples described above (e.g., Fig. 1 - 3) and/or below (e.g., Fig. 5 - 9).

Fig. 5 shows an example of a method 500 for a first processing unit. The method 500 comprises performing 510 at least one computation task, receiving 520 information about a performed communication task of each second processing unit of a plurality of second processing units. Further, the method 500 comprises determining 530 a balance based on the communication tasks received from each second processing unit of the plurality of second processing units and adjusting 540 a computation task parameter and/or a communication task parameter to improve a load balancing of a first processing unit and/or a second processing unit of the plurality of second processing units based on the balance. The method 500 may be performed by a first processing unit as described with reference to Fig. 1.

More details and aspects are mentioned in connection with the examples described above and/or below. The example shown in Fig. 5 may comprise one or more optional additional features corresponding to one or more aspects mentioned in connection with the proposed concept or one or more examples described above (e.g., Fig. 1 - 4) and/or below (e.g., Fig. 6 - 9).

Fig. 6 shows a block diagram of an example of a second processing unit 70. The second processing unit comprises one or more interfaces 72 configured to communicate with a first processing unit (e.g., the first processing unit as described with reference to Fig. 1) and processing circuitry 74 configured to control the one or more interfaces 72. Further, the processing circuitry 74 may be configured to receive information about an adjusted communication task parameter from the first processing unit and adjust a communication task parameter based on the received information. This way, a load balancing of a parallel computer system comprising the second processing unit can be improved by adjusting the communication task parameter even if the second processing unit cannot use the balance. The second processing unit 70 may be a counterpart to the first processing unit described with reference to Fig. 1.

In an example, the processing circuitry 74 may be further configured to receive information to reperform a communication task and to reperform the communication task based on the adjusted communication task parameter.

As shown in Fig. 6 the respective one or more interfaces 72 are coupled to the respective processing circuitry 74 at the processing device 70. In examples the processing circuitry 74 may be implemented using one or more processing units, one or more processing devices, any means for processing, such as a processor, a computer or a programmable hardware component being operable with accordingly adapted software. Similar, the described functions of the processing circuitry 74 may as well be implemented in software, which is then executed on one or more programmable hardware components. Such hardware components may comprise a general-purpose processor, a Digital Signal Processor (DSP), a micro-controller, etc. The processing circuitry 74 is capable of controlling the one or more interfaces 72, so that any data transfer that occurs over the one or more interfaces 72 and/or any interaction in which the one or more interfaces 72 may be involved may be controlled by the processing circuitry 74.

In an embodiment the processing device 70 may comprise a memory and at least one processing circuitry 74 operably coupled to the memory and configured to perform the below mentioned method.

In examples the one or more interfaces 72 may correspond to any means for obtaining, receiving, transmitting or providing analog or digital signals or information, e.g. any connector, contact, pin, register, input port, output port, conductor, lane, etc. which allows providing or obtaining a signal or information. The one or more interfaces 72 may be wireless or wireline and it may be configured to communicate, e.g., transmit or receive signals, information with further internal or external components. The one or more interfaces 72 may comprise further components to enable communication between vehicles. Such components may include transceiver (transmitter and/or receiver) components, such as one or more Low-Noise Amplifiers (LNAs), one or more Power-Amplifiers (PAs), one or more duplexers, one or more diplexers, one or more filters or filter circuitry, one or more converters, one or more mixers, accordingly adapted radio frequency components, etc.

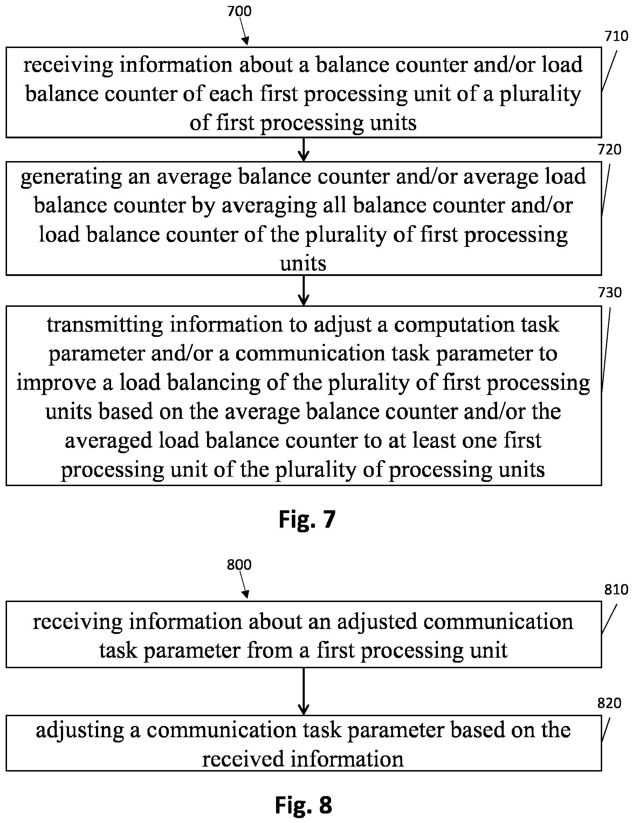

More details and aspects are mentioned in connection with the examples described above and/or below. The example shown in Fig. 6 may comprise one or more optional additional features corresponding to one or more aspects mentioned in connection with the proposed concept or one or more examples described above (e.g., Fig. 1 - 5) and/or below (e.g., Fig. 7 - 9).

Fig. 7 shows an example of a method 700 for a processing device. The method 700 comprises receiving 710 information about a balance and/or load balance of each first processing unit of a plurality of first processing units, generating 720 an average balance and/or average load balance by averaging all balance and/or load balance of the plurality of first processing units and transmitting 730 information to adjust a computation task parameter and/or a communication task parameter to improve a load balancing of the plurality of first processing units based on the average balance and/or the averaged load balance to at least one first processing unit of the plurality of first processing units. The method 700 may be performed by the processing unit as described with reference to Fig. 2.

More details and aspects are mentioned in connection with the examples described above and/or below. The example shown in Fig. 7 may comprise one or more optional additional features corresponding to one or more aspects mentioned in connection with the proposed concept or one or more examples described above (e.g., Fig. 1 - 6) and/or below (e.g., Fig. 8 - 9).

Fig. 8 shows an example of a method 800 for a second processing unit. The method 800 comprises receiving 810 information about an adjusted communication task parameter from a first processing unit and adjusting 820a communication task parameter based on the received information. The method 800 may be performed by the second processing unit as described with reference to Fig. 6.

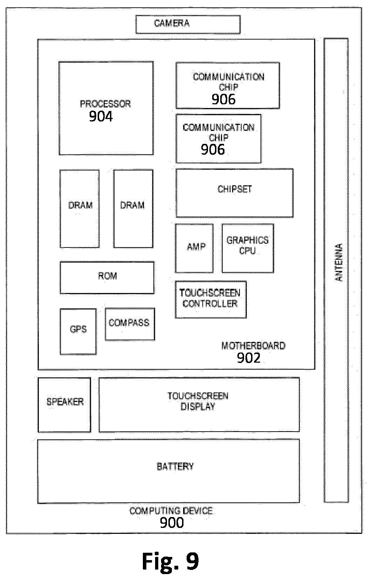

More details and aspects are mentioned in connection with the examples described above and/or below. The example shown in Fig. 8 may comprise one or more optional additional features corresponding to one or more aspects mentioned in connection with the proposed concept or one or more examples described above (e.g., Fig. 1 - 7) and/or below (e.g., Fig. 9).

Fig. 9 shows a computing device 900. The computing device 900 houses a board 902. The board 902 may include a number of components, including but not limited to a processor 904 and at least one communication chip 906. A first processing unit as described above (e.g., with reference to Fig. 1), a processing device as described above (e.g., with reference to Fig. 2), or the second processing unit as described above (e.g., with reference to Fig. 6) may be the processor 904 as shown in Fig. 9.

The processor 904 is physically and electrically coupled to the board 902. In some examples the at least one communication chip 906 is also physically and electrically coupled to the board 902. In further examples, the communication chip 906 is part of the processor 904.

Depending on its applications, computing device 900 may include other components that may or may not be physically and electrically coupled to the board 902. These other components include, but are not limited to, volatile memory (e.g., DRAM), non-volatile memory (e.g., ROM), flash memory, a graphics processor, a digital signal processor, a crypto processor, a chipset, an antenna, a display, a touchscreen display, a touchscreen controller, a battery, an audio codec, a video codec, a power amplifier, a global positioning system (GPS) device, a compass, an accelerometer, a gyroscope, a speaker, a camera, and a mass storage device (such as hard disk drive, compact disk (CD), digital versatile disk (DVD), and so forth). The communication chip 906 enables wireless communications for the transfer of data to and from the computing device 900. The term "wireless" and its derivatives may be used to describe circuits, devices, systems, methods, techniques, communications channels, etc., that may communicate data through the use of modulated electromagnetic radiation through a non-solid medium. The term does not imply that the associated devices do not contain any wires, although in some examples they might not. The communication chip 906 may implement any of a number of wireless standards or protocols, including but not limited to Wi-Fi (IEEE 802.11 family), WiMAX (IEEE 802.16 family), IEEE 802.20, long term evolution (LTE), Ev-DO, HSPA+, HSDPA+, HSUPA+, EDGE, GSM, GPRS, CDMA, TDMA, DECT, Bluetooth, derivatives thereof, as well as any other wireless protocols that are designated as 3G, 4G, 5G, and beyond. The computing device 900 may include a plurality of communication chips 906. For instance, a first communication chip 906 may be dedicated to shorter range wireless communications such as Wi-Fi and Bluetooth and a second communication chip 906 may be dedicated to longer range wireless communications such as GPS, EDGE, GPRS, CDMA, WiMAX, LTE, Ev-DO, and others.

The processor 904 of the computing device 900 includes an integrated circuit die packaged within the processor 904. In some examples, the integrated circuit die of the processor includes one or more devices that are assembled in an ePLB or eWLB based P0P package that that includes a mold layer directly contacting a substrate, in accordance with examples. The term "processor" may refer to any device or portion of a device that processes electronic data from registers and/or memory to transform that electronic data into other electronic data that may be stored in registers and/or memory.

The communication chip 906 also includes an integrated circuit die packaged within the communication chip 906. In accordance with another example, the integrated circuit die of the communication chip includes one or more devices that are assembled in an ePLB or eWLB based P0P package that that includes a mold layer directly contacting a substrate, in accordance with examples.

More details and aspects are mentioned in connection with the examples described above. The example shown in Fig. 9 may comprise one or more optional additional features corresponding to one or more aspects mentioned in connection with the proposed concept or one or more examples described above (e.g., Fig. 1 - 8).

The aspects and features described in relation to a particular one of the previous examples may also be combined with one or more of the further examples to replace an identical or similar feature of that further example or to additionally introduce the features into the further example.

Examples may further be or relate to a (computer) program including a program code to execute one or more of the above methods when the program is executed on a computer, processor or other programmable hardware component. Thus, steps, operations or processes of different ones of the methods described above may also be executed by programmed computers, processors or other programmable hardware components. Examples may also cover program storage devices, such as digital data storage media, which are machine-, processor- or computer-readable and encode and/or contain machine-executable, processor-executable or computer-executable programs and instructions. Program storage devices may include or be digital storage devices, magnetic storage media such as magnetic disks and magnetic tapes, hard disk drives, or optically readable digital data storage media, for example. Other examples may also include computers, processors, control units, (field) programmable logic arrays ((F)PLAs), (field) programmable gate arrays ((F)PGAs), graphics processor units (GPU), application-specific integrated circuits (ASICs), integrated circuits (ICs) or system-on-a-chip (SoCs) systems programmed to execute the steps of the methods described above.

It is further understood that the disclosure of several steps, processes, operations or functions disclosed in the description or claims shall not be construed to imply that these operations are necessarily dependent on the order described, unless explicitly stated in the individual case or necessary for technical reasons. Therefore, the previous description does not limit the execution of several steps or functions to a certain order. Furthermore, in further examples, a single step, function, process or operation may include and/or be broken up into several sub-steps, - functions, -processes or -operations.

If some aspects have been described in relation to a device or system, these aspects should also be understood as a description of the corresponding method. For example, a block, device or functional aspect of the device or system may correspond to a feature, such as a method step, of the corresponding method. Accordingly, aspects described in relation to a method shall also be understood as a description of a corresponding block, a corresponding element, a property or a functional feature of a corresponding device or a corresponding system.

An example (e.g., example 1) relates to a first processing unit, comprising one or more interfaces configured to communicate with a plurality of second processing units and processing circuitry configured to control the one or more interfaces and to: perform at least one computation task; receive information about a performed communication task of each second processing unit of the plurality of second processing units; determine a balance based on the communication tasks received from each second processing unit of the plurality of second processing units; and adjust a computation task parameter and/or a communication task parameter to improve a load balancing of the first processing unit and/or at least one second processing unit of the plurality of second processing units based on the balance.

Another example (e.g., example 2) relates to a previously described example (e.g., example 1) wherein determining the balance counter is performed by increasing a value of the balance counter by a number of each second processing unit of the plurality of second processing units from which the information is received before performing the computation task is completed.

Another example (e.g., example 3) relates to a previously described example (e.g., the example 2) the processing circuitry is further configured to: determine a load balance parameter by dividing the balance counter by a number of the plurality of second processing units; and adjust the computation task parameter and/or the communication task parameter based on the load balance parameter.

Another example (e.g., example 4) relates to a previously described example (e.g., the example 3) wherein if the load balance parameter is not within a predefined load balance parameter range the processing circuity is further configured to: reperform the at least one computation task with the adjusted computation task parameter and transmit information to the plurality of second processing units to reperform the communication task; reset the balance counter and redetermine the balance counter based on the reperformed communication tasks received from each second processing unit of the plurality of second processing units; redetermine the load balance parameter; and check if the redetermined load balance parameter is within the load balance parameter range and if not readjust the computation task parameter and/or the communication task parameter to improve a load balancing of the first processing unit and/or at least one second processing unit of the plurality of second processing units based on the redetermined load balance parameter; and reperform the at least one computation task, with the readjusted computation task parameter and transmit information to the plurality of second processing units to reperform the communication task and redetermine the load balance parameter until the load balancing parameter is within the load balance parameter range.

Another example (e.g., example 5) relates to a previously described example (e.g., one of the examples 3-4) wherein the transmitted information to the plurality of second processing units to reperform the communication task further comprises information about the adjusted communication parameter and/or the readjusted communication parameter for at least one second processing unit of the plurality of second processing units.

Another example (e.g., example 6) relates to a previously described example (e.g., one of the examples 4-5) wherein the primary construct serves as root class.

Another example (e.g., example 7) relates to a previously described example (e.g., one of the examples1-6) wherein a load balance parameter range is between 0.95 and 0.97.

Another example (e.g., example 8) relates to a previously described example (e.g., one of the examples 1-7) wherein adjust the computation task parameter and/or the communication task parameter comprises adjusting a message size of the plurality of communication tasks.

Another example (e.g., example 9) relates to a previously described example (e.g., one of the examples 1-8) wherein adjust the computation task parameter and/or the communication task parameter comprises adjusting a compute size of the least one computation task.

Another example (e.g., example 10) relates to a previously described example (e.g., one of the examples 1-9) wherein adjust the computation task parameter and/or the communication task parameter comprises adjusting a communication pipeline depth.

Another example (e.g., example 11) relates to a previously described example (e.g., one of the examples 1-10) wherein determining the balance counter and/or determining the load balance parameter comprises the use of a parallel programming library providing one-sided remote direct memory access.

Another example (e.g., example 12) relates to a previously described example (e.g., one of the examples 1-11) wherein determining the balance counter and/or determining the load balance parameter comprises the use of a one-sided message-passing interface exchange at a cluster level.

Another example (e.g., example 13) relates to a previously described example (e.g., one of the examples 3-12) wherein adjust the computation task parameter and/or the communication task parameter based on the load balance parameter comprises a use of a user input.

Another example (e.g., example 14) relates to a previously described example (e.g., one of the examples 3-13) wherein adjust the computation task parameter and/or the communication task parameter based on the load balance parameter comprises a use of a predefined computation task parameter and/or a communication task parameter.

Another example (e.g., example 15) relates to a previously described example (e.g., one of the examples 1-14) wherein the processing circuitry is further configured to adjust a predefined load balance parameter range based on a user input.

An example (e.g., example 16) relates to a processing device, comprising one or more interfaces configured to communicate with a plurality of first processing units as described above (e.g., according to any of the examples 1-15); and a processing circuitry configured to control the one or more interfaces and to: receive information about a balance of each first processing unit of the plurality of first processing units; generate an average balance by averaging all balance of the plurality of first processing units; transmit information to adjust the computation task parameter and/or the communication task parameter to improve a load balancing of the plurality of first processing units based on the average balance to at least one first processing unit of the plurality of first processing units.

Another example (e.g., example 17) relates to a previously described example (e.g., the example 16) wherein the processing circuitry is further configured to: receive information about a load balance parameter of each first processing unit from the plurality of first processing units; generate an average load balance parameter by average the load balance parameter of all first processing units of the plurality of first processing units; and transmit information to adjust the computation task parameter and/or the communication task parameter to improve a load balancing of the plurality of first processing units based on the average load balance parameter to the least one first processing unit of the plurality of first processing units.

An example (e.g., example 18) relates to a second processing unit, comprising one or more interfaces configured to communicate with a first processing unit; and processing circuitry configured to control the one or more interfaces and to: receive information about an adjusted communication task parameter from the first processing unit; and adjust a communication task parameter based on the received information.

Another example (e.g., example 19) relates to a previously described example (e.g., the example 18) wherein the processing circuitry is further configured to: receive information to reperform a communication task; and reperform the communication task based on the adjusted communication task parameter.

An example (e.g., example 20) relates to a method, comprising performing at least one computation task; receiving information about a performed communication task of each second processing unit of a plurality of second processing units; determining a balance based on the communication tasks received from each second processing unit of the plurality of second processing units; and adjusting a computation task parameter and/or a communication task parameter to improve a load balancing of the first processing unit and/or a second processing unit of the plurality of second processing units based on the balance.

Another example (e.g., example 21) relates to a previously described example (e.g., the example 20) wherein determining the balance counter is performed by increasing a value of the balance counter by a number of each second processing unit of the plurality of second processing units from which the information is received before performing the computation task is completed.

Another example (e.g., example 22) relates to a previously described example (e.g., one of the examples 20-21) further comprising determining a load balance parameter by dividing the balance counter by a number of the plurality of second processing units; and adjusting the computation task parameter and/or the communication task parameter based on the load balance parameter.

Another example (e.g., example 23) relates to a previously described example (e.g., one of the examples 20-22) wherein if the load balance parameter is not within a predefined load balance parameter range further comprising: reperforming the at least one computation task with the adjusted computation task parameter and transmit information to the plurality of second processing units to reperform the communication task; resetting the balance counter and redetermining the balance counter based on the reperformed communication tasks received from each second processing unit of the plurality of second processing units; redetermining the load balance parameter; readjusting the computation task parameter and/or the communication task parameter to improve a load balancing of the first processing unit and/or at least one second processing unit of the plurality of second processing units based on the redetermined load balance parameter; and checking if the redetermined load balance parameter is within the load balance parameter range and if not reperform the at least one computation task, with the readjusted computation task parameter and transmit information to the plurality of second processing units to reperform the communication task and redetermine the load balance parameter until the load balancing parameter is within the load balance parameter range.

Another example (e.g., example 24) relates to a previously described example (e.g., one of the examples 20-23) wherein if the load balance parameter is not within a predefined load balance parameter range further comprising: performing a further computation task; resetting the balance counter and redetermining the balance counter based on the further performed communication tasks received from each second processing unit of the plurality of second processing units; redetermining the load balance parameter; readjusting the computation task parameter and/or the communication task parameter to improve a load balancing of the first processing unit and/or at least one second processing unit of the plurality of second processing units based on the redetermined load balance parameter; and checking if the redetermined load balance parameter is within the load balance parameter range and if not perform another further computation task, communication tasks and redetermination of the load balance parameter until the load balancing parameter is within the load balance parameter range.

An example (e.g., example 25) relates to a non-transitory, computer-readable medium comprising a program code that, when the program code is executed on a computer, a processor, or a programmable hardware component, performs one of the above examples (e.g., one of the examples 20-24).

An example (e.g., example 26) relates to a method for a processing unit, comprising receiving information about a balance and/or load balance of each first processing unit of a plurality of first processing units; generating an average balance and/or average load balance by averaging all balance and/or load balance of the plurality of first processing units; and transmitting information to adjust a computation task parameter and/or a communication task parameter to improve a load balancing of the plurality of first processing units based on the average balance and/or the averaged load balance to at least one first processing unit of the plurality of first processing units.

An example (e.g., example 27) relates to a non-transitory, computer-readable medium comprising a program code that, when the program code is executed on a computer, a processor, or a programmable hardware component, performs one of the above examples (e.g., the example 26).

An example (e.g., example 28) relates to a method for a processing unit, comprising receiving information about an adjusted communication task parameter from a first processing unit; and adjusting a communication task parameter based on the received information.

Another example (e.g., example 29) relates to a previously described example (e.g., the example 28) further comprising receiving information to reperform a communication task; and reperforming the communication task based on the adjusted communication task parameter.

An example (e.g., example 30) relates to a non-transitory, computer-readable medium comprising a program code that, when the program code is executed on a computer, a processor, or a programmable hardware component, performs one of the above examples (e.g., one of the examples 28-29).

An example (e.g., example 31) relates to a computer program having a program code for performing the method as described above (e.g., one of the examples 26), when the computer program is executed on a computer, a processor, or a programmable hardware component.

An example (e.g., example 32) relates to a computer program having a program code for performing the method as described above (e.g., one of the examples 28-29), when the computer program is executed on a computer, a processor, or a programmable hardware component.

An example (e.g., example 33) relates to a first processing unit, comprising means for processing and means for storing information, wherein the first processing unit is configured to perform at least one computation task; receive information about a performed communication task of each second processing unit of the plurality of second processing units; determine a balance based on the communication tasks received from each second processing unit of the plurality of second processing units; and adjust a computation task parameter and/or a communication task parameter to improve a load balancing of the first processing unit and/or at least one second processing unit of the plurality of second processing units based on the balance.

An example (e.g., example 34) relates to a processing device, comprising means for processing and means for storing information, wherein the processing device is configured to receive information about a balance of each first processing unit of the plurality of first processing units; generate an average balance by averaging all balances of the plurality of first processing units; transmit information to adjust the computation task parameter and/or the communication task parameter to improve a load balancing of the plurality of first processing units based on the average balances to at least one first processing unit of the plurality of first processing units.

An example (e.g., example 35) relates to a second processing unit, comprising means for processing and means for storing information, wherein the second processing unit is configured to receive information about an adjusted communication task parameter from the first processing unit; and adjust a communication task parameter based on the received information.

The following claims are hereby incorporated in the detailed description, wherein each claim may stand on its own as a separate example. It should also be noted that although in the claims a dependent claim refers to a particular combination with one or more other claims, other examples may also include a combination of the dependent claim with the subject matter of any other dependent or independent claim. Such combinations are hereby explicitly proposed, unless it is stated in the individual case that a particular combination is not intended. Furthermore, features of a claim should also be included for any other independent claim, even if that claim is not directly defined as dependent on that other independent claim.

## Claims

1. A first processing unit, comprising:
one or more interfaces configured to communicate with a plurality of second processing units; and
processing circuitry configured to control the one or more interfaces and to:
perform at least one computation task;
receive information about a performed communication task of each second processing unit of the plurality of second processing units;
determine a balance based on the communication tasks received from each second processing unit of the plurality of second processing units; and
adjust a computation task parameter and/or a communication task parameter to improve a load balancing of the first processing unit and/or at least one second processing unit of the plurality of second processing units based on the balance.

2. The first processing unit according to claim 1, wherein
determining the balance is performed by increasing a value of a balance counter by a number of each second processing unit of the plurality of second processing units from which the information is received before performing the computation task is completed.

3. The first processing unit according to claim 2, wherein
the processing circuitry is further configured to:
determine a load balance parameter by dividing the balance counter by a number of the plurality of second processing units; and
adjust the computation task parameter and/or the communication task parameter based on the load balance parameter.

4. The first processing unit according to claim 3, wherein
if the load balance parameter is not within a predefined load balance parameter range the processing circuity is further configured to:
reperform the at least one computation task with the adjusted computation task parameter and transmit information to the plurality of second processing units to reperform the communication task;
reset the balance counter and redetermine the balance counter based on the reperformed communication tasks received from each second processing unit of the plurality of second processing units;
redetermine the load balance parameter; and
check if the redetermined load balance parameter is within the load balance parameter range and if not
readjust the computation task parameter and/or the communication task parameter to improve a load balancing of the first processing unit and/or at least one second processing unit of the plurality of second processing units based on the redetermined load balance parameter; and
reperform the at least one computation task, with the readjusted computation task parameter and transmit information to the plurality of second processing units to reperform the communication task and redetermine the load balance parameter until the load balancing parameter is within the load balance parameter range.

5. The first processing unit according to any one of claim 3 or 4, wherein
the transmitted information to the plurality of second processing units to reperform the communication task further comprises information about the adjusted communication task parameter and/or the readjusted communication task parameter for at least one second processing unit of the plurality of second processing units.

6. The first processing unit according to any one of claim 3-5, wherein
if the load balance parameter is not within a predefined load balance parameter range the processing circuity is further configured to:
perform a further computation task;
reset the balance counter and redetermine the balance counter based on the further performed communication tasks received from each second processing unit of the plurality of second processing units;
redetermine the load balance parameter; and
check if the redetermined load balance parameter is within the load balance parameter range and if not
readjust the computation task parameter and/or the communication task parameter to improve a load balancing of the first processing unit and/or at least one second processing unit of the plurality of second processing units based on the redetermined load balance parameter; and
perform another further computation task, communication tasks and redetermination of the load balance parameter until the load balancing parameter is within the load balance parameter range.

7. The first processing unit according to any one of the preceding claims, wherein
a load balance parameter range is 0.95 to 0.97.

8. The first processing unit according to any one of the preceding claims, wherein adjust the computation task parameter and/or the communication task parameter comprises adjusting a message size of a communication task of the at least one second processing unit.

9. The first processing unit according to any one of the preceding claims, wherein
adjust the computation task parameter and/or the communication task parameter comprises adjusting a compute size of the least one computation task.

10. The first processing unit according to any one of the preceding claims, wherein
adjust the computation task parameter and/or the communication task parameter comprises adjusting a communication pipeline depth.

11. The first processing unit according to any one of the preceding claims, wherein determining the balance counter and/or determining the load balance parameter comprises the use of a parallel programming library providing one-sided remote direct memory access.

12. A processing device; comprising:
one or more interfaces configured to communicate with a plurality of first processing units according to any of the preceding claims; and
a processing circuitry configured to control the one or more interfaces and to:
receive information about a balance of each first processing unit of the plurality of first processing units;
generate an average balance by averaging all balances of the plurality of first processing units;
transmit information to adjust the computation task parameter and/or the communication task parameter to improve a load balancing of the plurality of first processing units based on the average balance to at least one first processing unit of the plurality of first processing units.

13. The processing device according to claim 12, wherein
the processing circuitry is further configured to:
receive information about a load balance parameter of each first processing unit from the plurality of first processing units;
generate an average load balance parameter by averaging all load balance parameters of the plurality of first processing units; and
transmit information to adjust the computation task parameter and/or the communication task parameter to improve a load balancing of the plurality of first processing units based on the average load balance parameter to at least one first processing unit of the plurality of first processing units.

14. A method, comprising:
performing at least one computation task;
receiving information about a performed communication task of each second processing unit of a plurality of second processing units;
determining a balance based on the communication tasks received from each second processing unit of the plurality of second processing units; and
adjusting a computation task parameter and/or a communication task parameter to improve a load balancing of a first processing unit and/or a second processing unit of the plurality of second processing units based on the balance.

15. A computer program having a program code for performing the method according to any of claims 14, when the computer program is executed on a computer, a processor, or a programmable hardware component.
